# EUROPÄISCHE PATENTSCHRIFT

(11) **EP 2 888 142 B1**
(45) Veröffentlichungstag und Bekanntmachung des Hinweises auf die Patenterteilung: **22.06.2016**
(21) Anmeldenummer: 13753104.2
(22) Anmeldetag: 19.08.2013
(51) Int. Cl.: B60W 50/08, B60W 50/00, B60W 30/06, B60W 30/12, B60W 30/16, B60W 30/17

(54) **VERFAHREN ZUR STEUERUNG EINES AUTONOMEN FAHRZEUGSYSTEMS UND KRAFTFAHRZEUG**
METHOD FOR CONTROLLING AN AUTONOMOUS VEHICLE SYSTEM AND MOTOR VEHICLE
PROCÉDÉ DE COMMANDE D'UN SYSTÈME POUR VÉHICULE AUTONOME ET VÉHICULE AUTOMOBILE

(30) Priorität: 23.08.2012 DE 102012016802
(43) Veröffentlichungstag der Anmeldung: 01.07.2015
(73) Patentinhaber: Audi AG, 85045 Ingolstadt (DE)
(72) Erfinder: REICHEL, Michael, 85049 Ingolstadt (DE); SIEDERSBERGER, Karl-Heinz, 86669 Königsmoos (DE)
(74) Vertreter: Thielmann, Frank
(86) Internationale Anmeldenummer: PCT/EP2013/002496
(87) Internationale Veröffentlichungsnummer: WO 2014/029492

(56) Entgegenhaltungen:
- DE-A1- 10 210 547
- DE-A1- 19 821 163
- DE-A1-102007 046 765
- DE-A1-102010 020 330
- DE-A1-102010 028 837
- DE-A1-102010 037 467
- DE-A1-102011 121 442

## Beschreibung

Die Erfindung betrifft ein Verfahren zur Steuerung eines zum autonomen Betrieb eines Kraftfahrzeugs ausgebildeten Fahrzeugsystems sowie ein Kraftfahrzeug, wobei aus einer eine aktuelle Position des Kraftfahrzeugs beschreibenden Ortsinformation und wenigstens einer ortsbezogenen, die Zulässigkeit der Nutzung des Fahrzeugsystems betreffenden Erlaubnisinformation eine Einstellinformation für das Fahrzeugsystem ermittelt wird und wenigstens ein Betriebsparameter des Fahrzeugsystems in Abhängigkeit von der Einstellinformation gewählt wird.

Zum autonomen Betrieb eines Kraftfahrzeugs ausgebildete Fahrzeugsysteme, häufig auch als autonome Fahrerassistenzsysteme bezeichnet, wurden im Stand der Technik für die verschiedensten Zwecke bereits vorgeschlagen. Eine bekannte Gruppe von Systemen beschäftigt sich beispielsweise mit automatischen Einparkvorgängen, insbesondere auch einer automatischen Parkplatzsuche. Doch auch Systeme mit einem weitergehenden Anwendungsbereich wurden bereits vorgeschlagen, jedoch sind bislang verschiedenste Zulassungsverfahren noch nicht abgeschlossen. Bekannt und gängig sind im Übrigen auch semiautonome Fahrerassistenzsysteme, beispielsweise solche, die Lenkeingriffe zum Halten einer Spur vornehmen oder solche, die eine Längsregelung, beispielsweise in Bezug auf ein voranfahrendes Fahrzeug (ACC-System) ermöglichen. Schließlich wurden bereits sogenannte Stauassistenten vorgeschlagen, die die Führung des Kraftfahrzeugs in einer Stausituation, insbesondere also bei niedrigen Geschwindigkeiten, teilweise oder vollständig übernehmen sollen.

Im Hinblick auf die Sicherheit werden autonome Fahrzeugsysteme weitgehend kritisch betrachtet. Ihr Nutzen ist daher zumindest zunächst auf bestimmte Bereiche bzw. Verkehrsräume beschränkt, beispielsweise Privatgelände. Um ein autonomes Fahrzeugsystem zumindest teilweise einsetzen zu können, muss der aktuell befahrene Bereich (Verkehrsraum) für die spezielle Art des pilotierten (autonomen) Fahrens "gewidmet" sein. Als Widmung bezeichnet man einen Hoheitsakt, durch den ein Gegenstand einen öffentlichrechtlichen Sonderstatus erhält. Mit ihr wird der öffentliche Zweck (beispielsweise Gemeingebrauch, hier Nutzung zum autonomen Fahren) festgelegt, dem der Gegenstand zu dienen bestimmt ist. Verschiedene Konzepte zur Widmung verschiedener Bereiche des Landverkehrsraums (Gesamtmenge der für Langfahrzeuge nutzbaren Verkehrswege) wurden bereits diskutiert. So sind Bereiche mit Sondernutzungsrecht denkbar, Privatgrund ohne Widmung, Privatgrund mit einer den Gültigkeitsbereich eines Gesetzes auf diesen erstreckenden Widmung, öffentlich-rechtlicher Grund und dergleichen. Entsprechend ist es denkbar, bestimmte Bereiche des Landverkehrsraums als für bestimmte Arten autonomen Fahrens freigegeben zu widmen.

Autonome Fahrerassistenzsysteme, also zum autonomen Betrieb des Kraftfahrzeugs ausgebildete Fahrzeugsysteme der eingangs beschriebenen Art, werden heutzutage so konzipiert, dass sie gewisse Grund-Betriebsparameter aufweisen, die beispielsweise auf Links- bzw. Rechtsverkehr und allgemeine Funktionen und Systemgrenzen ausgelegt sind, welche - wie der Betrieb des Fahrzeugsystems - vom Benutzer, insbesondere also dem Fahrer des Kraftfahrzeugs, einstellbar sind. Das bedeutet, über den Betrieb eines Fahrzeugsystems, welches autonomes Fahren ermöglicht, entscheidet heutzutage innerhalb vorgegebener Grenzen hauptsächlich der Benutzer an sich, so dass hierbei durchaus Probleme auftreten können.

Dabei sind allerdings Funktionalitäten autonomer Fahrerassistenzsysteme nicht nur an die Widmung von Bereichen gekoppelt, sondern gegebenenfalls auch an andere Umstände. So kann die Nutzung von Funktionalitäten von einer das Kraftfahrzeug umgebenden Infrastruktur, beispielsweise bei Parksystemen, abhängig sein, oder andere, insbesondere benachbarte Kraftfahrzeuge müssen selbst einen gewissen Grad an Automatisierung aufweisen. Letzteres ist beispielsweise dann notwendig, wenn eine Art "elektronische Deichsel" realisiert werden soll, während in einer Kolonne gefahren wird und dergleichen.

Mithin kann es bei zum autonomen Betrieb von Kraftfahrzeugen ausgebildeten Fahrzeugsystemen leicht zu Fehlkonfigurierungen, sei es durch den Benutzer oder von Werk aus, kommen.

DE 198 21 163 A1 betrifft ein Fahrer-Assistenzsystem und ein Verfahren zu dessen Betrieb. Dabei wird ein Erfassungsmittel verwendet, um momentane Umgebungsparameter zu bestimmen, die mit Hilfe von Vergleichsmitteln mit zulässigen Umgebungsparametern verglichen werden können. Das Fahrer-Assistenzsystem wird deaktiviert, wenn sich vorbestimmte momentane Umgebungsparameter außerhalb der für das Fahrer-Assistenzsystem zulässigen Umgebungsparameter befinden bzw. im anderen Fall aktiviert. Genannte Beispiele sind auch zum vollautomatischen Führen des Kraftfahrzeugs ausgebildete Systeme. Es wird vorgeschlagen, dass mittels eines GPS-Systems zunächst eine momentane Position des Kraftfahrzeugs festgestellt wird, wonach anhand dieser Positionsdaten aus Daten eines Landkartenspeichers ermittelt wird, auf welcher Verkehrswegeart sich das Fahrzeug momentan befindet. Abhängig von dieser Verkehrswegeart wird es aktiviert oder deaktiviert.

DE 10 2010 037 467 A1 offenbart ein Motorfahrzeug mit einem Standortbestimmungsmonitor, einer Jurisdiktions-Karten-Datenbank, einer Regelungsdatenbank und einem Controller, der aktuelle Regelungserfordernisse in Bezug auf die Fahrzeugkoordinaten ermitteln soll. Dann kann die Aktion der identifizierten Fahrzeugfunktionen modifiziert werden. Konkret geht es hauptsächlich um gesetzliche Regelungen zur Funktion und Ausstattungsmerkmalen von Motorfahrzeugen.

DE 102 10 547 A1 betrifft einen Geschwindigkeitsregler mit Stop & Go Funktion, mithin die automatische Steuerung von Anfahr-, Roll- und Anhaltevorgängen in Abhängigkeit von Bewegungen eines Zielobjekts. Es werden während des Stop & Go Betriebs fortlaufend vordefinierte Bedingungen geprüft, die einem sicheren Stop & Go Betrieb widersprechen, wobei bei Vorliegen einer solchen Bedingung eine Prozedur zur Abschaltung der Stop & Go Funktion eingeleitet wird. So wird der Anwendungsbereich der Stop & Go Funktion zwangsweise auf Verkehrssituationen beschränkt, in denen diese Funktion gefahrlos benutzt werden kann. Ein Beispiel hierfür sind Fahrten in Wohngebieten.

DE 10 2010 020 330 A1 betrifft ein Verfahren zur Erkennung von Verkehrszeichen, wobei als Anwendung genannt ist, den Fahrer bei einer Überschreitung der zulässigen Höchstgeschwindigkeit zu warnen. DE 10 2010 028 837 A1 betrifft ein Verfahren zur Anpassung eines Fahrerassistenzsystems, bei dem mindestens ein Parameter des Fahrerassistenzsystem in Abhängigkeit der Informationen aus einer Umfeldsensorik eingestellt wird, wobei es allerdings um Dinge wie den Straßenverlauf und dergleichen geht, die auch mit einer Fahrzeug-Zu-Fahrzeug-Kommunikationseinrichtung ermittelt werden können.

Die nachveröffentlichte DE 10 2007 046 765 A1 betrifft ein Steuerverfahren und System zum Steuern einer Kommunikation von einem ersten Fahrzeug zu mindestens einem zweiten Fahrzeug, bei welchem das erste und das zumindest zweite Fahrzeug mit einer satelliten-, mobilfunknetz- und kartengestützten Navigations- oder Ortungseinrichtung und einer Zweiweg-Kommunikationseinrichtung ausgerüstet sind und eine aktuelle Geschwindigkeitsinformation und eine aktuelle Positionsinformation senden und empfangen bzw. austauschen. Der Minimalabstand zwischen den Fahrzeugen wird mit einem automatischen Abstandssystem (ACC) überwacht und geregelt. Konkret wird vorgeschlagen, Umgebungssensoren des Kraftfahrzeugs durch eine Kraftfahrzeug-Zu-Kraftfahrzeug-Kommunikation zu ersetzen, um die Funktion einer automatischen Kolonnenfahrt umsetzen zu können.

Der Erfindung liegt daher die Aufgabe zugrunde, auf verbesserte Art und Weise eine an die Umgebungsumstände angepasste Einstellung von Betriebsparametern eines zum autonomen Betrieb eines Kraftfahrzeugs ausgebildeten Fahrzeugsystems zu erlauben.

Zur Lösung dieser Aufgabe sind bei einem Verfahren der eingangs genannten Art erfindungsgemäß die Merkmale des Anspruchs 1 vorgesehen

Die vorliegende Erfindung schlägt also vor, insbesondere in einem Steuergerät des Fahrzeugsystems selbst, vollständig automatisch den Ort des Kraftfahrzeuges, also seine aktuelle Position, und eine ortsabhängige Erlaubnisinformation zu ermitteln. Die Erlaubnisinformation betrifft die Zulässigkeit bzw. Möglichkeit der Nutzung des Fahrzeugsystems, so dass gemeinsam mit dem aktuellen Ort des Kraftfahrzeugs automatisch eine Einstellinformation abgeleitet werden kann, aus welcher, beispielsweise über eine Look-Up-Tabelle oder sonstige Zusammenhänge, wenigstens ein zugeordneter Betriebsparameter des Fahrzeugsystems abgeleitet werden kann, der entsprechend automatisch eingestellt wird.

Auf diese Weise ist das Kraftfahrzeug mithin in der Lage, beispielsweise speziell für die Nutzung von Funktionalitäten des Fahrzeugsystems freigegebene Bereiche zu erkennen und sich selbst entsprechend zu konfigurieren. Beispielsweise kann vorgesehen sein, dass ein pilotiertes Garagenparken nur auf privaten Geländen, auf denen dies gezielt zugelassen wurde, möglich ist, mithin ein Fahrzeugsystem so konfiguriert werden kann, dass es außerhalb von solchen privaten Geländen nicht aktivierbar ist. Neben der hier beispielhaft beschriebenen allgemeinen Aktivierbarkeit von Funktionalitäten des Fahrzeugsystems als Betriebsparameter sind jedoch auch komplexere Konfigurationsvorgänge denkbar.

So kann in einem weiteren Beispiel für ein Fahrzeugsystem, welches das Kraftfahrzeug autonom in einen sicheren Zustand überführen kann, aufgrund der Erlaubnisinformation festgestellt werden, wie sich der sichere Zustand für den aktuellen Bereich definiert und wo das Kraftfahrzeug sicher abgestellt werden kann. Ein Beispiel ist das Anhalten auf einem Seitenstreifen, der nicht für den regulären Verkehr freigegeben ist. Das Fahrzeugsystem kann dann automatisch entsprechend konfiguriert werden, indem geeignete Betriebsparameter auf die notwendigen Werte gesetzt werden.

Mithin ist die Erlaubnisinformation nicht allein als allgemeine Aussage über die Zulässigkeit eines autonomen Fahrbetriebs bzw. bestimmter Funktionalitäten des autonomen Fahrerassistenzsystems zu betrachten, sondern kann darüber hinaus auch Angaben darüber enthalten, wie eine Funktionalität, beispielsweise ein Einparken oder ein Überführen in einen sicheren Zustand, realisiert werden soll.

Eine weitere Möglichkeit von Betriebsparametern, die im Rahmen des erfindungsgemäßen Verfahrens automatisch eingestellt werden können, sind Systemgrenzen des Fahrzeugsystems, das bedeutet beispielsweise, eine Maximalgeschwindigkeit, bis zu der ein autonomes Fahren erlaubt ist, ein räumlicher Bereich, in dem autonomes Fahren gestattet ist sowie Grenzwerte bezüglich sonstiger Parameter, beispielsweise fahrdynamischer Parameter des Kraftfahrzeugs und dergleichen. Gegebenenfalls kann in diesem Zusammenhang vorgesehen sein, dass dem Fahrzeugsystem mehrere Automatisierungsstufen oder Automatisierungsgrade zugeordnet sind, von denen wenigstens einer in Abhängigkeit der Erlaubnisinformation ausgewählt wird, beispielsweise als entsprechende Einstellinformation, die dann in entsprechende Betriebsparameter übersetzt werden kann bzw. diese enthält, wie bereits dargelegt wurde.

Ersichtlich bietet das erfindungsgemäße Verfahren mithin den Vorteil, automatisch Informationen, nämlich die Erlaubnisinformationen, zu ermitteln, so dass vollautomatisch eine optimale und sich im Rahmen des rechtlich und technisch erlaubten bewegende Einstellung des zum autonomen Betrieb des Kraftfahrzeugs ausgebildeten Fahrzeugsystems ermöglicht wird.

Zur automatischen Ermittlung der Erlaubnisinformation sind dabei eine Vielzahl von Möglichkeiten denkbar, die auch kombiniert verwendet werden können, das bedeutet, es können mehrere Erlaubnisinformationen aus mehreren Quellen gewonnen werden. Dabei sind erfindungsgemäß im Wesentlichen drei Möglichkeiten vorgeschlagen, die im Folgenden näher dargelegt werden sollen.

So ist es in einer ersten Ausgestaltung der vorliegenden Erfindung möglich, dass wenigstens eine Erlaubnisinformation als einem Kartenelement einer digitalen Karte zugeordnetes Attribut abgerufen wird. Es ist also beispielsweise denkbar, im digitalen Kartenmaterial eines Navigationssystems des Kraftfahrzeugs ein Attribut zu ergänzen, welches beispielsweise die Widmung des entsprechenden Kartenelements, also beispielsweise eines räumlichen Bereichs, wiedergibt oder diese genauer aufgeschlüsselt enthält, mithin eine offizielle Erlaubnis zur Nutzung bestimmter autonomer Funktionalitäten. Es sind jedoch auch andere Arten von Karten denkbar, beispielsweise auch durch einen Nutzer komplett selbst definierte Bereiche, beispielsweise anhand von GPS-Informationen, denen Erlaubnisinformationen als Attribut zugeordnet werden können. Auch eine Ergänzung einer digitalen Karte eines Navigationssystems durch einen Benutzer ist jedoch denkbar.

Es ist also allgemein möglich, dass das Attribut wenigstens gebietsweise durch einen Benutzer verändert und/oder eingegeben wird. Dies ist vor allem dann zweckmäßig, wenn er selbst gewisse Freigaben verwalten möchte, beispielsweise die Nutzung einer autonomen Park- bzw. Abstellfunktion auf einem Privatgrundstück, beispielsweise einem eigenen Grundstück oder einem von mehreren Personen genutzten privaten Grundstück, beispielsweise einer Tiefgarage oder dergleichen. Dabei kann eine Bedienoberfläche innerhalb des Kraftfahrzeugs vorgesehen werden, über welche eine sozusagen persönliche Widmung von räumlichen Bereichen eingegeben wird, beispielsweise durch Markierung auf einem Kartenausschnitt oder auf eine andere Art und Weise.

Im Sinne möglichst aktueller Attribute in der digitalen Karte kann jedoch auch vorgesehen sein, dass das Attribut wenigstens gebietsweise durch einen Server aktualisiert wird. Es ist also denkbar, dass das Kraftfahrzeug über Kommunikationsverbindungen, beispielsweise das Internet, regelmäßige Aktualisierungen für das digitale Kartenmaterial erhält, die auch die als Attribut hinterlegte Erlaubnisinformation betreffen, so dass beispielsweise Umwidmungen schnell erfasst werden können.

Erfindungsgemäß ist vorgesehen, dass wenigstens eine Erlaubnisinformation aus im Rahmen einer Kraftfahrzeug-zu-Kraftfahrzeug-Kommunikation empfangenen Kommunikationsdaten ermittelt wird. Es ist also auch denkbar, dass eine Information über die aktuelle Nutzbarkeit von Funktionalitäten autonomer Fahrzeugsysteme aus einer Kraftfahrzeug-zu-Kraftfahrzeug-Kommunikation (C2C-Kommunikation) gewonnen wird. Dabei ist vorgesehen, dass die Erlaubnisinformation aus wenigstens einem Betriebsparameter von wenigstens einem zum autonomen Betrieb eines Kraftfahrzeugs ausgebildeten Fahrzeugsystems wenigstens eines anderen Kraftfahrzeugs betreffenden Kommunikationsdaten ermittelt wird. Das bedeutet also, es kann aus der Nutzung von Funktionalitäten autonomer Fahrerassistenzsysteme und dergleichen durch andere Kraftfahrzeuge darauf geschlussfolgert werden, ob und inwieweit Funktionalitäten des kraftfahrzeugeigenen Fahrzeugsystems eingesetzt werden können. Dies kann letztlich auf zweierlei Weise genutzt werden.

Zum einen ist es denkbar, die grundsätzliche Nutzung von Funktionalitäten, die nicht unbedingt auf andere Kraftfahrzeuge bezogen sind, über solche Kommunikationsdaten zu bestimmen. Das bedeutet, daraus, dass eine Vielzahl, insbesondere die Mehrzahl, von Kraftfahrzeugen in der Umgebung autonome Funktionalitäten nutzen, kann gefolgert werden, dass dies auch für das eigene Kraftfahrzeug zulässig und sinnvoll ist. Zum anderen kann die Nutzung von Kommunikationsdaten auch so verstanden werden, dass die Realisierbarkeit von Funktionen des Fahrzeugsystems überprüft wird. Ein Beispiel hierfür sind Fahrzeugsysteme, die letztlich davon abhängig sind, dass auch andere Kraftfahrzeuge die Fahrzeugsysteme benutzen, beispielsweise bei der Realisierung einer sogenannten "elektronischen Deichsel". Beispielsweise kann in einer engen Kolonne nur dann gefahren werden, wenn die vorausfahrenden Fahrzeuge für die elektronische Deichsel selbst technisch gerüstet sind. In einem anderen Beispiel kann ein vollautomatisches Fahren im Stau davon abhängig gemacht werden, wie viele andere Kraftfahrzeuge pilotiert, also autonom, fahren und/oder fahren könnten. Die Kommunikationsmöglichkeit mit anderen Kraftfahrzeugen wird also vorteilhaft genutzt, um die Freigabe pilotierter Funktionen vom Grad der Automatisierung in der Umgebung des eigenen Kraftfahrzeugs abhängig zu machen.

In einer weiteren Ausgestaltung, die sich auch auf die automatische Ermittlung der Ortsinformation bezieht, kann vorgesehen sein, dass wenigstens eine Erlaubnisinformation und/oder die Ortsinformation aus von einem Sensor und/oder einer Kommunikationseinrichtung des Kraftfahrzeugs empfangenen Messdaten ermittelt wird. In diesem Fall werden also Sensordaten oder aber auch eine Kommunikationseinrichtung zur Kommunikation mit feststehenden Sendern (C2x-Kommunkation) genutzt, um Messdaten zu ermitteln, die den aktuellen Ort des Kraftfahrzeugs und/oder wenigstens eine Erlaubnisinformation beschreiben, wobei eine Ortsinformation hier auch relativ sein kann, worauf im Folgenden noch näher eingegangen werden wird.

So kann zum einen zweckmäßigerweise vorgesehen sein, dass über wenigstens einen optischen Sensor, insbesondere eine Kamera, Messdaten bezüglich eines die Zulässigkeit der Nutzung des Fahrzeugsystems betreffenden Schildes oder Markers aufgenommen und zur Ermittlung der Erlaubnisinformation und/oder der Ortsinformation ausgewertet werden. Ist also beispielsweise vorgesehen, bestimmte, für die Nutzung von Funktionen des den autonomen Betrieb des Kraftfahrzeugs erlaubenden Fahrzeugsystems geeignete oder zulässige Gebiete optisch zu kennzeichnen, sie es über bestimmte Marker (Landmarken) oder Schilder, so können diese durch einen optischen Sensor im Kraftfahrzeug erfasst werden. Beispielsweise kann eine Bildverarbeitung genutzt werden, um Marker und/oder Schilder in Daten einer Kamera als optischer Sensor zu ermitteln, ähnlich zu einer Verkehrszeichenerkennung. Beispielsweise ist es möglich, sowohl bei Einfahrt in einen solchen Bereich als auch bei Ausfahrt in einen solchen Bereich entsprechende Marker und/oder Schilder vorzusehen, so dass insbesondere aus der bekannten Optik des optischen Sensors auch gleich geschlussfolgert werden kann, wann das Kraftfahrzeug diesen Bereich erreicht und wann es sich in ihm befindet, mithin eine (relative) Ortsinformation als aktuelle Position bestimmt werden kann.

Alternativ oder zusätzlich kann vorgesehen sein, dass die Erlaubnisinformation und/oder die Ortsinformation aus von einem Funksender, insbesondere einem Transponder, empfangenen Messdaten ermittelt wird. Dabei ist es zum einen denkbar, dass statt den optischen Markern und/oder Schildern letztlich auch funkbasierte Landmarken bzw. Marker verwendet werden können, die beispielsweise aktiv Signale aussenden können, die von der Kommunikationseinrichtung des Kraftfahrzeugs empfangen und ausgewertet werden können, beispielsweise im Hinblick auf die relative Position des Funksenders, sowie einen vorzugsweise mit übertragenen Informationsgehalt der Signale als Erlaubnisinformation. Enthaltene Erlaubnisinformationen können auf verschiedene Art und Weise ausgestaltet sein, beispielsweise konkret angeben, welche Funktionen eines Fahrzeugsystems erlaubt sind oder dergleichen, oder aber auch nur allgemein die Nutzung autonomer Funktionen bei Kraftfahrzeugen erlauben.

Schließlich sei an dieser Stelle noch angemerkt, dass es auch im erfindungsgemäßen Verfahren selbstverständlich möglich ist, die Ortsinformation über einen GPS-Sensor zu ermitteln. Auch die Nutzung von differentiellem GPS ist denkbar.

In weiterer zweckmäßiger Ausgestaltung der vorliegenden Erfindung kann vorgesehen sein, dass die Betriebsparameter einen auf die Erlaubnisinformation angepassten Funktionsumfang des Fahrzeugsystems beschreiben, insbesondere wenigstens einen die Systemgrenzen beschreibenden Funktionsumfang. Wie bereits dargelegt wurde, ist es zwar in einer ersten Abstraktion des erfindungsgemäßen Verfahrens denkbar, dessen grundsätzliche Verwendbarkeit über die Erlaubnisinformation und die entsprechend sich ergebenden Betriebsparameter zu regeln, jedoch ist es auch denkbar, wie bereits angedeutet wurde, feinere Unterteilungen vorzunehmen, bis hin zu einer konkreten Parametrisierung von Funktionen und einer konkreten Definition von Systemgrenzen. Letztlich kann, von der Genauigkeit der Erlaubnisinformation abhängig, eine Vielzahl von Detailstufen im Rahmen der vorliegenden Erfindung realisiert werden, insbesondere, wie bereits ausgeführt wurde, verschiedene Automatisierungsgrade und dergleichen.

Eine spezielle Systemgrenze für den autonomen Betrieb des Kraftfahrzeugs erlaubende Fahrzeugsysteme ist das Verlassen eines räumlichen Bereichs, in dem eine bestimmte Funktion, die aktiv ist, zulässig war, wobei sie es an einem aktuellen Ort nun nicht mehr ist. In einer bevorzugten Weiterbildung der Erfindung kann hierbei vorgesehen sein, dass bei einem Übergang von einem Bereich mit einer einen höheren Automatisierungsgrad beschreibenden Erlaubnisinformation zu einem Bereich mit einer einen niedrigeren Automatisierungsgrad beschreibenden Erlaubnisinformation wenigstens eine Information an den Fahrer, insbesondere eine Fahrübernahmeaufforderung, ausgegeben wird und/oder das Kraftfahrzeug automatisch in einen sicheren Zustand, insbesondere den Stillstand, überführt wird. Endet also letztlich der erlaubte Automatisierungsgrad, kann das erfindungsgemäße Verfahren auch bereits eine Degradierungsstrategie, die in einen sicheren Zustand führt, vorsehen. Insbesondere sind Fälle denkbar, in denen der Fahrer nicht "im Loop" ist, so dass er durch eine Fahrübernahmeaufforderung darauf hingewiesen werden kann, dass Fahrtätigkeiten zumindest teilweise durch ihn wieder zu übernehmen sind. In einer konkreten Ausgestaltung kann beispielsweise vorgesehen sein, dass nach der Fahrübernahmeaufforderung für einen bestimmten Zeitraum auf eine Fahrübernahme gewartet wird, wobei nach Ablaufen dieses Zeitraums das Fahrzeug in einen sicheren Zustand, insbesondere den Stillstand, überführt wird, um so eine größtmögliche Sicherheit zu garantieren. Dabei sei darauf hingewiesen, dass auch hier selbstverständlich zwischen unterschiedlichen Situationen unterschieden werden kann, in denen unterschiedliche Aktionspläne verwendet werden, was die Information des Fahrers und das Überführen in einen sicheren Zustand angeht.

Neben dem Verfahren betrifft die vorliegende Erfindung auch ein Kraftfahrzeug, welches ein zum autonomen Betrieb des Kraftfahrzeugs ausgebildetes Fahrzeugsystem umfasst. Das Kraftfahrzeug, insbesondere konkret ein Steuergerät des Fahrzeugsystems, ist dabei zur Durchführung des erfindungsgemäßen Verfahrens ausgebildet, insbesondere also zur automatischen Ermittlung des aktuellen Ortes und des Erlaubnisinformation, zur automatischen Ableitung der Einstellinformation und zum automatischen Einstellen der entsprechenden Betriebsparameter. Dabei können zur Ermittlung der Ortsinformation und der Einstellinformation beispielsweise geeignete Sensoren, ein Navigationssystem, eine Kommunikationseinrichtung und/oder andere Fahrzeugsysteme abgefragt bzw. mit entsprechenden Aufgaben betraut werden, was über ein Bussystem des Kraftfahrzeugs geschehen kann. Sämtliche Ausführungen bezüglich des erfindungsgemäßen Verfahrens lassen sich analog auf das erfindungsgemäße Kraftfahrzeug übertragen, mit welchem mithin auch die Vorteile der vorliegenden Erfindung erhalten werden können.

Weitere Vorteile und Einzelheiten der vorliegenden Erfindung ergeben sich aus den im Folgenden beschriebenen Ausführungsbeispielen sowie anhand der Zeichnung. Dabei zeigen:
- Fig. 1: einen Ablaufplan des erfindungsgemäßen Verfahrens, und
- Fig. 2: ein erfindungsgemäßes Kraftfahrzeug.

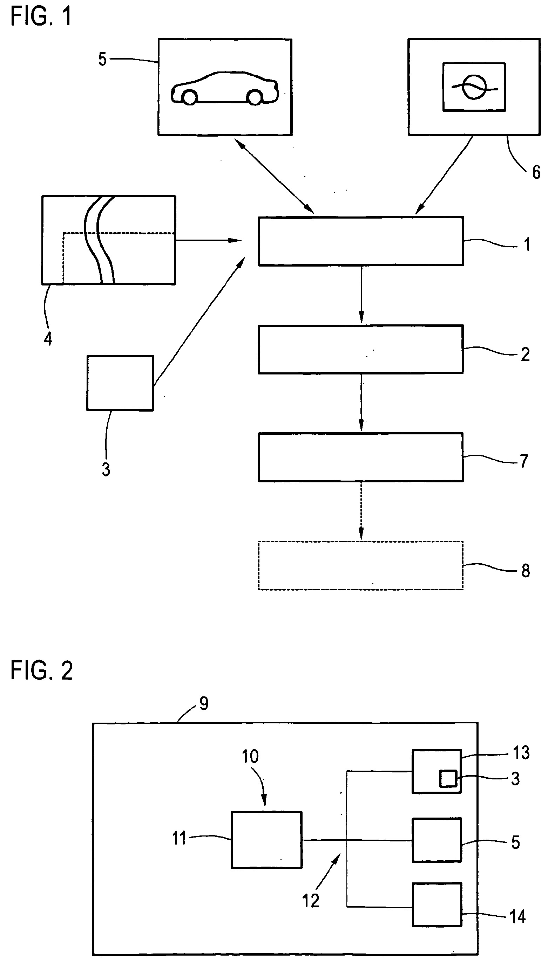

Fig. 1 zeigt einen Ablaufplan eines Ausführungsbeispiels des erfindungsgemäßen Verfahrens. Das Verfahren wird dabei automatisch von einem Steuergerät eines zum autonomen Betrieb eines Kraftfahrzeugs ausgebildeten Fahrzeugsystems durchgeführt, im Falle der Ermittlung von Daten durch Messung durch entsprechendes Ansteuern bzw. Abfragen des jeweiligen Sensors bzw. der jeweiligen Kommunikationseinrichtung.

Dabei dient das dargestellte Verfahren der Parametrierung des Fahrzeugsystems im Hinblick auf Umstände in der Umgebung des Kraftfahrzeugs, die die Zulässigkeit bzw. Nutzbarkeit von Funktionen des Fahrzeugsystems betreffen, insbesondere also eine Verkehrsraumwidmung/sonstige Erlaubnis zur Nutzung autonomer Funktionen und/oder insbesondere bei kooperativen Funktionen das Vorhandensein einer geeigneten Menge von anderen Kraftfahrzeugen, die ebenso einen geeigneten Automatisierungsgrad aufweisen.

In einem Schritt 1 des Verfahrens wird nun zunächst automatisch eine die aktuelle Position beschreibende Ortsinformation des Kraftfahrzeugs und eine die Zulässigkeit der Nutzung des Fahrzeugsystems betreffende Erlaubnisinformation ermittelt, wobei letztere ortsbezogen, mithin gemeinsam mit der Ortsinformation in einem späteren Schritt 2 zu einer Einstellinformation für das Fahrzeugsystem verarbeitet werden kann.

Dabei können selbstverständlich mehrere Ortsinformationen betrachtet werden; in jedem Fall ist es jedoch zweckmäßig, mehrere Erlaubnisinformationen zu sammeln und entsprechend zu verarbeiten. Verschiedene Methoden, um Orts- und Erlaubnisinformationen zu ermitteln, sind in Fig. 1 schematisch dargestellt.

So ist es zum einen möglich und in vielen Kraftfahrzeugen ohnehin schon gängig, eine aktuelle Position des Kraftfahrzeugs, also eine Ortsinformation, über einen GPS-Sensor 3 zu bestimmen.

Eine erste Quelle einer Erlaubnisinformation stellt eine digitale Karte 4 dar, die beispielsweise in einem Navigationssystem des Kraftfahrzeugs abgelegt sein kann. In der digitalen Karte 4 sind Kartenelementen, also bestimmten räumlichen Bereichen, verschiedene Attribute zugeordnet. Eines dieser Attribute ist nun wenigstens eine Erlaubnisinformation, die entsprechend durch das Steuergerät des Kraftfahrzeugsystems abgerufen werden kann.

Solche Erlaubnisinformationen darstellenden Attribute können durch einen Benutzer selbst definiert bzw. Kartenelementen zugeordnet werden. Hierzu ist eine entsprechende Benutzeroberfläche gegeben, über die beispielsweise ein Privatgrund, auf dem autonomes Fahren zulässig oder sogar gewünscht ist, entsprechend der dort zulässigen Funktionen, beispielsweise "automatisches Einparken", zu markieren. So können auch private, nicht allgemein gültige Bereiche, die im Gegensatz zu Widmungen und dergleichen nicht in allgemein gültige Kartenwerke Eingang finden, der digitalen Karte 4 hinzugefügt werden. Dabei sei angemerkt, dass, um allgemein gültige, für jeden Fahrer nutzbare räumliche Bereiche, in denen autonome Funktionen zulässig sind, aktuell zu halten, die digitale Karte 4 über eine Kommunikationsverbindung, beispielsweise das Internet, mit einem Server in Kontakt steht, von dem sie regelmäßig Aktualisierungen auch bezüglich der Attribute, die Erlaubnisinformationen enthalten, erhält.

Das Navigationssystem - wie im Übrigen auch andere Fahrzeugsysteme - kann selbstverständlich auch genutzt werden, um die Ortsinformation zu verfeinern, beispielsweise das Kraftfahrzeug einer bestimmten Straße bzw. einem Straßenabschnitt zuzuordnen, wie dies im Stand der Technik grundsätzlich bekannt ist. Eine Spurzuordnung auf der Straße, beispielsweise einer Autobahn, kann unter Nutzung von Umfelddaten bzw. diese nutzenden weiteren Fahrzeugsystemen, beispielsweise Spurhalteassistenz- oder Spurwechselassistenzsystemen, ermittelt werden. Mithin kann die Ortsinformation beliebig genau bestimmt werden, so dass insbesondere auch Zulässigkeiten, mithin Erlaubnisinformationen, verwendet werden können, die auf bestimmte Spuren bezogen sind, beispielsweise also speziell dem autonomen Betrieb von Kraftfahrzeugen gewidmete Fahrspuren und der dergleichen.

Es sei schließlich noch angemerkt, dass auch eine selbstdefinierte digitale Karte 4 oder dergleichen angewendet werden kann.

Eine weitere Informationsquelle sind über eine Kraftfahrzeug-zu-Kraftfahrzeug-Kommunikationseinrichtung bzw. allgemein eine auch zur sonstigen Kommunikation ausgebildete Kommunikationseinrichtung 5 ermittelte Kommunikationsdaten und Messdaten. Aus Kommunikationsdaten einer Kraftfahrzeug-zu-Kraftfahrzeug-Kommunikation kann auf den Automatisierungsgrad bei Kraftfahrzeugen geschlossen werden, die sich im selben Bereich wie das eigene Kraftfahrzeug befinden. Zum einen können hieraus allgemeine Schlussfolgerungen über die Verwendbarkeit von Funktionen des zum autonomen Betrieb des Kraftfahrzeugs ausgebildeten Fahrzeugsystems als Erlaubnisinformation geschlossen werden; insbesondere jedoch sind Kommunikationsdaten der Kraftfahrzeug-zu-Kraftfahrzeug-Kommunikation nützlich, wenn autonome Funktionen gegeben sind, die gänzlich oder in ihrem Funktionsumfang von dem Automatisierungsgrad der Umgebung abhängen. So ist beispielsweise eine enge Kolonne mit einer elektronischen Deichsel nur dann möglich, wenn vorausfahrende Kraftfahrzeuge ebenso eine entsprechende autonome Funktion aufweisen; auch die Funktionsweise von autonomen Staupiloten kann angepasst werden, je nachdem, wie viele Kraftfahrzeuge in der näheren Umgebung ebenso einen Staupiloten aufweisen und dergleichen.

Eine Kommunikationseinrichtung 5 kann jedoch auch zur Kraftfahrzeug-zu-X-Kommunikation (C2X-Kommunikation) bzw. zum Empfang von Funksignalen eingesetzt werden, welche Erlaubnisinformationen und Ortsinformationen enthalten können. So ist es denkbar, für Bereiche, in denen bestimmte autonome Funktionen zugelassen sind, Transponder zu installieren, die diese Information portieren. Gleichzeitig ist es denkbar, aus den empfangenen Funksignalen eine Position des Kraftfahrzeugs relativ zu den Transpondern zu bestimmen, so dass dann bei Bestimmung der Einzelinformationen schlussgefolgert werden kann, ob sich das Kraftfahrzeug denn im relevanten Bereich befindet. Dabei sind verschiedene Möglichkeiten denkbar, den Detailgrad der in dem Funksignal enthaltenen Erlaubnisinformation einzustellen. Zweckmäßig ist eine solche Installation von Transpondern beispielsweise in Privatbereichen wie Parkhäusern oder Parkplätzen, bei denen dedizierte Bereiche für autonome Fahrfunktionen freigegeben sind.

Eine weitere Datenquelle für Erlaubnisinformationen stellen Messdaten, insbesondere optische Messdaten 6, dar. Hierbei kann ein optischer Sensor, insbesondere eine Kamera, verwendet werden, um Marker (Landmarken) und/oder Schilder aufzunehmen, die Hinweise auf erlaubten autonomen Betrieb geben, beispielsweise bestimmte, im Rahmen einer Bildverarbeitung erfassbare Symbole. Auch ist im Sinne einer Verkehrszeichenerkennung eine Erkennung von entsprechenden Schildern möglich. Die Kenntnis über die Ausrichtung des optischen Sensors ermöglicht weiterhin die Bestimmung der bzw. einer (relativen) Ortsinformation, welche gegebenenfalls auch durch fahrdynamische Daten des Kraftfahrzeugs "weitergeführt" werden kann, um festzustellen, ob das Kraftfahrzeug in den markierten Bereich eintritt bzw. bei einem ein Ende eines markierten Bereiches angebenden Marker bzw. Schild, ob es diesen Bereich wieder verlässt.

Ersichtlich sind verschiedene Varianten denkbar, um an Erlaubnisinformationen und Ortsinformationen automatisch zu gelangen, wobei besonders vorteilhaft wenigstens eine der Informationsquellen 4 und 6 gemeinsam mit Kommunikationsdaten der Kraftfahrzeug-zu-Kraftfahrzeug-Kommunikation verwendet werden, um alle Aspekte abzudecken, nämlich zum einen die "Widmung" eines Verkehrsraumes im allgemeineren Sinne, zum anderen aber auch den Automatisierungsgrad der Kraftfahrzeuge in der Umgebung des eigenen Kraftfahrzeugs.

Der in Schritt 2 ermittelten Einstellinformation sind nun für verschiedene Werte der Einstellinformation Sätze von Betriebsparametern zugeordnet, die die verfügbare Funktionalität des zum autonomen Betrieb des Kraftfahrzeugs ausgebildeten Fahrzeugsystems betreffen. Während Betriebsparameter die grundsätzliche Aktivierbarkeit autonomer Funktionen bestimmen können, betreffen sie bevorzugt auch den Funktionsumfang, insbesondere Systemgrenzen, das bedeutet, es ist eine Abstufung in verschiedene Automatisierungsgrade möglich, die entsprechend der Erlaubnisinformation und der Ortsinformation gewählt werden können. Zur Ermittlung von Betriebsparametern in Abhängigkeit der Einstellinformation, letztlich also in Abhängigkeit der Ortsinformation und der Erlaubnisinformation, kann beispielsweise eine Look-Up-Tabelle oder ein anderer Zusammenhang vorgesehen werden, um geeignete Betriebsparameter aus einer Speichereinrichtung abzurufen oder diese zu ermitteln.

In einem Schritt 7 wird dann das zum autonomen Betrieb des Kraftfahrzeugs ausgebildete Fahrzeugsystem entsprechend eingestellt.

Die Schritte 1, 2 und 7 werden kontinuierlich, insbesondere also in regelmäßigen Abständen, wiederholt, um so ständig automatisch eine auf die Umgebung des Kraftfahrzeugs angepasste Einstellung des zum autonomen Betrieb des Kraftfahrzeugs ausgebildeten Fahrzeugsystems zu ermöglichen.

Das erfindungsgemäße Verfahren bietet noch eine weitere Möglichkeit, die in Fig. 1 durch den optionalen Schritt 8 angedeutet wird. Wird nämlich festgestellt, dass das Kraftfahrzeug im Begriff ist, einen Bereich zu verlassen, in dem ein höherer Automatisierungsgrad zulässig war, und mithin in einen Bereich einzutreten, in dem nur ein niedrigerer Automatisierungsgrad möglich ist, können entsprechende, die Sicherheit des Kraftfahrzeugs erhöhende Maßnahmen vorgesehen werden. Dies kann im Übrigen abhängig davon sein, in welcher Art sich die Bereiche unterscheiden. Abhängig also von den Unterschieden in der Einstellinformation oder der Erlaubnisinformation ist es mithin denkbar, verschiedene Maßnahmen zu ergreifen, um die Sicherheit des Kraftfahrzeugs auch weiterhin zu gewährleisten, insbesondere einen bestimmten Aktionsplan vorzusehen.

In einem Beispiel kann, wenn ein Bereich vollständig autonomen Betriebs des Kraftfahrzeugs verlassen wird, zunächst eine Fahrübernahmeaufforderung an den Fahrer ausgegeben werden, woraufhin diesem ein gewisser Zeitraum zur Verfügung gestellt wird, um Fahrfunktionen zumindest teilweise wieder selbst zu übernehmen. Geschieht dies nicht, kann vorgesehen sein, das Kraftfahrzeug in einen sicheren Zustand, insbesondere den Stillstand, zu überführen, wobei auch hier verschiedene Varianten denkbar sind, die beispielsweise durch eine Erlaubnisinformation beschrieben werden können, beispielsweise die Möglichkeit eines Abstellens des Kraftfahrzeugs auf einem Seitenstreifen.

Fig. 2 zeigt schließlich eine Prinzipskizze eines erfindungsgemäßen Kraftfahrzeugs 9. Dieses weist das zum autonomen Betrieb des Kraftfahrzeugs 9 ausgebildete Fahrzeugsystem 10 auf, welches neben einem geeigneten Zugriff auf Aktoren und Sensoren ein Steuergerät 11 aufweist, in welchem automatisch des erfindungsgemäße Verfahren durchgeführt wird. Über ein Bussystem 12 steht das Steuergerät 11 mit weiteren Fahrzeugsystemen in Verbindung, wobei hier nur beispielhaft ein Navigationssystem 13 mit dem GPS-Sensor 3, die Kommunikationseinrichtung 5 und eine Kamera 14 gezeigt sind. Selbstverständlich sind jedoch, wie bereits erwähnt, üblicherweise eine Vielzahl sonstiger, weiterer Fahrzeugsysteme und Sensoren vorgesehen, die für die autonomen Funktionen, aber auch das erfindungsgemäße Verfahren nützliche Eingangsdaten über das Bussystem 12, beispielsweise einen CAN-Bus, liefern.

## Patentansprüche

1. Verfahren zur Steuerung eines zum autonomen Betrieb eines Kraftfahrzeugs (9) ausgebildeten Fahrzeugsystems (10),
wobei aus einer eine aktuelle Position des Kraftfahrzeugs (9) beschreibenden Ortsinformation und wenigstens einer ortsbezogenen, die Zulässigkeit der Nutzung des Fahrzeugsystems (10) betreffenden Erlaubnisinformation eine Einstellinformation für das Fahrzeugsystem (10) ermittelt wird und wenigstens ein Betriebsparameter des Fahrzeugsystems (10) in Abhängigkeit von der Einstellinformation gewählt wird, **dadurch gekennzeichnet,**
**dass** wenigstens eine Erlaubnisinformation aus im Rahmen einer Kraftfahrzeug-zu-Kraftfahrzeug-Kommunikation empfangenen Kommunikationsdaten ermittelt wird, wobei die Erlaubnisinformation aus wenigstens einen Betriebsparameter von wenigstens einem zum autonomen Betrieb eines Kraftfahrzeugs ausgebildeten Fahrzeugsystem wenigstens eines anderen Kraftfahrzeugs betreffenden Kommunikationsdaten ermittelt wird.

2. Verfahren nach Anspruch 1,
**dadurch gekennzeichnet,**
**dass** wenigstens eine Erlaubnisinformation als einem Kartenelement einer digitalen Karte (4) zugeordnetes Attribut abgerufen wird.

3. Verfahren nach Anspruch 2,
**dadurch gekennzeichnet,**
**dass** das Attribut wenigstens gebietsweise durch einen Benutzer verändert und/oder eingegeben und/oder über einen Server aktualisiert wird.

4. Verfahren nach einem der vorangehenden Ansprüche,
**dadurch gekennzeichnet,**
**dass** wenigstens eine Erlaubnisinformation und/oder die Ortsinformation aus von einem Sensor und/oder einer Kommunikationseinrichtung (5) des Kraftfahrzeugs (9) empfangenen Messdaten ermittelt wird.

5. Verfahren nach Anspruch 4,
**dadurch gekennzeichnet,**
**dass** über wenigstens einen optischen Sensor Messdaten (6) bezüglich eines die Zulässigkeit der Nutzung des Fahrzeugsystems (10) betreffenden Schildes oder Markers aufgenommen und zur Ermittlung der Erlaubnisinformation und/oder der Ortsinformation ausgewertet werden.

6. Verfahren nach Anspruch 4 oder 5,
**dadurch gekennzeichnet,**
**dass** die Erlaubnisinformation und/oder die Ortsinformation aus von einem Funksender empfangenen Messdaten ermittelt wird.

7. Verfahren nach einem der Ansprüche 4 bis 6,
**dadurch gekennzeichnet,**
**dass** die Ortsinformation über einen GPS-Sensor (3) ermittelt wird.

8. Verfahren nach einem der vorangehenden Ansprüche,
**dadurch gekennzeichnet,**
**dass** die Betriebsparameter einen auf die Erlaubnisinformation angepassten Funktionsumfang des Fahrzeugsystems (10) beschreiben, insbesondere wenigstens einen die Systemgrenzen beschreibenden Funktionsumfang.

9. Verfahren nach Anspruch 8,
**dadurch gekennzeichnet,**
**dass** bei einem Übergang von einem Bereich mit einer einen höheren Automatisierungsgrad beschreibenden Erlaubnisinformation zu einem Bereich mit einer einen niedrigeren Automatisierungsgrad beschreibenden Erlaubnisinformation wenigstens eine Information an den Fahrer, insbesondere eine Fahrübernahmeaufforderung, ausgegeben wird und/oder das Kraftfahrzeug (9) automatisch in einen sicheren Zustand, insbesondere den Stillstand, überführt wird.

10. Kraftfahrzeug (9), umfassend ein zum autonomen Betrieb des Kraftfahrzeugs (9) ausgebildetes Fahrzeugsystem (10), ausgebildet zur Durchführung eines Verfahrens nach einem der vorangehenden Ansprüche.

## Claims

1. Method for controlling a vehicle system (10) designed for autonomous operation of a motor vehicle (9), wherein setting information for the vehicle system (10) is determined from location information describing a current position of the motor vehicle (9) and from at least one location-related permission information item relating to the permissibility of use of the vehicle system (10), and at least one operating parameter of the vehicle system (10) is selected as a function of the setting information, **characterised in that** at least one permission information item is determined from communication data received as part of a motor-vehicle to motor-vehicle communication, wherein the permission information item is determined from communication data relating to at least one operating parameter of at least one vehicle system, of at least one other motor vehicle, designed for autonomous operation of a motor vehicle.

2. Method according to claim 1, **characterised in that** at least one permission information item is obtained as an attribute assigned to a map element of a digital map (4).

3. Method according to claim 2, **characterised in that** the attribute is altered and/or entered and/or updated on a server, at least in some areas, by a user.

4. Method according to any of the preceding claims, **characterised in that** at least one permission information item and/or the location information is determined from measurement data from a sensor and/or a communication device (5) of the motor vehicle (9).

5. Method according to claim 4, **characterised in that** measurement data (6) relating to a shield or marker concerning the permissibility of use of the vehicle system (10) is received via an optical sensor and evaluated to determine the permission information item and/or the location information.

6. Method according to claim 4 or 5, **characterised in that** the permission information item and/or location information is determined from measurement data received from a radio transmitter.

7. Method according to one of claims 4 to 6, **characterised in that** the location information is determined via a GPS sensor (3).

8. Method according to any of the preceding claims, **characterised in that** the operating parameters describe a functional scope of the vehicle system (10) adapted to the permission information item, in particular at least one functional scope describing the system limits.

9. Method according to claim 8, **characterised in that** in the event of a transition from an area with permission information describing a higher degree of automation to an area with permission information describing a lower degree of automation, at least one information item is output to the driver, in particular a prompt to take over the driving, and/or the motor vehicle (9) is automatically transferred into a safe state, in particular brought to a standstill.

10. Motor vehicle (9) comprising a vehicle system (10) which is designed for autonomous operation of a motor vehicle (9), designed for the implementation of a method according to any of the preceding claims.

## Revendications

1. Procédé de commande d'un système de véhicule (10) conçu pour le fonctionnement autonome d'un véhicule automobile (9),
selon lequel on détermine à partir d'une information géographique décrivant une position actuelle du véhicule automobile (9) et d'au moins une information d'autorisation se rapportant au lieu géographique et concernant la permission d'utiliser le système de véhicule (10) une information de réglage pour le système de véhicule (10) et on choisit au moins un paramètre de fonctionnement du système de véhicule (10) en fonction de l'information de réglage,
**caractérisé en ce qu'**on détermine au moins une information d'autorisation à partir de données de communication reçues dans le cadre d'une communication de véhicule automobile à véhicule automobile, l'information d'autorisation étant déterminée à partir de données de communication concernant au moins un paramètre de fonctionnement d'au moins un système de véhicule, conçu pour le fonctionnement autonome d'un véhicule automobile, d'au moins un autre véhicule automobile.

2. Procédé selon la revendication 1, **caractérisé en ce que** l'au moins une information d'autorisation peut être interrogée en tant qu'attribut associé à un élément de carte d'une carte numérique (4).

3. Procédé selon la revendication 2, **caractérisé en ce que** l'attribut est, au moins par région, modifié et/ou entré par un utilisateur et/ou actualisé par l'intermédiaire d'un serveur.

4. Procédé selon l'une des revendications précédentes, **caractérisé en ce qu'**au moins une information d'autorisation et/ou l'information géographique sont déterminées à partir de données de mesure reçues par un capteur et/ou par un dispositif de communication (5) du véhicule automobile (9).

5. Procédé selon la revendication 4, **caractérisé en ce que**, par l'intermédiaire d'au moins un capteur optique, des données de mesure (6) concernant un panneau et/ou un repère indiquant la permission d'utiliser le système de véhicule (10) sont recueillies et sont évaluées pour déterminer l'information d'autorisation et/ou l'information géographique.

6. Procédé selon la revendication 4 ou 5, **caractérisé en ce que** l'information d'autorisation et/ou l'information géographique sont déterminées à partir de données de mesure reçues d'un émetteur radio.

7. Procédé selon l'une des revendications 4 à 6, **caractérisé en ce que** l'information géographique est déterminée par l'intermédiaire d'un capteur GPS (3).

8. Procédé selon l'une des revendications précédentes, **caractérisé en ce que** les paramètres de fonctionnement décrivent une gamme fonctionnelle, adaptée à l'information d'autorisation, du système de véhicule (10), notamment au moins une gamme fonctionnelle décrivant les limites du système.

9. Procédé selon la revendication 8, **caractérisé en ce que**, lors d'une transition d'une zone avec une information d'autorisation décrivant un degré supérieur d'automatisation à une zone avec une information d'autorisation décrivant un degré inférieur d'automatisation, au moins une information est fournie au conducteur, notamment une demande de prise en charge de la conduite, et/ou le véhicule automobile (9) est passé automatiquement dans un état sûr, notamment l'immobilisation.

10. Véhicule automobile (9), comprenant un système de véhicule (10) conçu pour le fonctionnement autonome du véhicule automobile (9), conçu pour la mise en oeuvre d'un procédé selon l'une des revendications précédentes.
